(19) Europäisches Patentamt
European Patent Office
Office européen des brevets

(11) Veröffentlichungsnummer: **0 049 873**
**B1**

(12) **EUROPÄISCHE PATENTSCHRIFT**

(45) Veröffentlichungstag der Patentschrift: **16.01.85**

(51) Int. Cl.⁴: **C 09 B 5/28**, C 09 B 1/48

(21) Anmeldenummer: **81108091.0**

(22) Anmeldetag: **08.10.81**

(54) **Verfahren zur Carbazolierung von Anthrimiden.**

(30) Priorität: **14.10.80 CH 7651/80**

(43) Veröffentlichungstag der Anmeldung: **21.04.82 Patentblatt 82/16**

(45) Bekanntmachung des Hinweises auf die Patenterteilung: **16.01.85 Patentblatt 85/3**

(84) Benannte Vertragsstaaten: **CH DE FR GB IT LI**

(56) Entgegenhaltungen:
**DE - A - 1 817 388**
**DE - A - 1 950 422**
**GB - A - 1 094 847**

(73) Patentinhaber: **CIBA-GEIGY AG, Postfach, CH-4002 Basel (CH)**

(72) Erfinder: **Seha, Zdenek, Glaserbergstrasse 27, CH-4056 Basel (CH)**

(74) Vertreter: **Berg, Wilhelm, Dr. et al, Patentanwälte Dr. Berg Dipl.-Ing. Stapf Dipl.-Ing. Schwabe Dr. Dr. Sandmair Postfach 86 02 45 Stuntzstrasse 16, D-8000 München 86 (DE)**

**EP 0 049 873 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von Küpenfarbstoffen auf der Basis von Diphthaloylcarbazolen durch Carbazolierung von Anthrimiden durch Einwirkung eines Komplexes von Titantetrahalogeniden (Chloriden oder Bromiden) und einem Sulfon im Medium des Sulfons als Lösungsmittel.

Derivate der Diphthaloylcarbazole bilden eine der Hauptklassen der Küpenfarbstoffe. Sie weisen allgemein gute koloristische Eigenschaften und einen breiten Umfang der Farbtöne vom Gelb und Orangegelb über das Braun, Olivbraun bis zum Grau, zur Khakifarbe und zum Schwarz auf. Ihre Herstellung besteht in der sogenannten Carbazolierung der Anthrimide, ein Begriff, der in der Farbstoffchemie zur Dehydrocyclisierung der sekundären Amine der Anthrachinonreihe, verbunden mit der Bildung eines 5-gliedrigen Stickstoff enthaltenden Heterocyclus verwendet wird. Die Carbazolierung kann man im wesentlichen mit drei Mitteln durchführen: Mit Schwefelsäure, Metallhalogeniden oder Alkalimetallhydroxiden, wobei jedes dieser Mittel seine spezifischen Eigenschaften und Wirkungen besitzt, welche in der Regel durch die Konstitution der Ausgangssubstanzen festgelegt ist.

Von den Metallhalogeniden besitzt besonders das Aluminiumchlorid in der industriellen Anwendungspraxis eine überragende Bedeutung. Es wird entweder in Form einer Schmelze zusammen mit Natriumchlorid oder in Form einer Lösung in organischen Basen (hauptsächlich Pyridin) verwendet, siehe z.B. FIAT 1313 II, 181 und GB-PS 585 798.

Auch die Verwendung von Titantetrachlorid zur Carbazolierung ist in der Literatur vereinzelt erwähnt worden. Im US-Patent 2 416 931 ist z.B. die Verwendung von Titantetrachlorid (bzw. Titantetrabromid, Zirkoniumtetrachlorid sowie Zirkoniumtetrabromid) zur Carbazolierung von Anthrimiden beschrieben.

Das Herstellungsverfahren besteht im Erhitzen einer Suspension von Anthrimiden in einem Überschuss von Titantetrachlorid oder besser in einer Lösung von Titantetrachlorid in einem inerten Lösungsmittel (in der Regel Halogenderivate des Benzols) auf Temperaturen von 100–200 °C. Als primäre Produkte werden Komplexverbindungen der entstandenen Diphthaloylcarbazolderivate mit den benutzten Metallhalogeniden gewonnen, welche isoliert und weiter in verschiedenen Herstellungsweisen zu den Farbstoffendprodukten verarbeitet werden.

Diese beiden Metallhalogenid-Methoden haben den Nachteil, dass sie sehr arbeits-, zeit- und materialaufwendig sind. Ausserdem verläuft die Reaktion in den oben erwähnten Lösungsmitteln während der ganzen Reaktionszeit in einer inhomogenen Phase. Diesen Nachteil hat man z.B. durch verschiedene Dosierungsvarianten der Reaktanden auszugleichen versucht.

Die sukzessive Dosierung einer Komponente in die vorgelegte zweite Komponente gestattet zwar eine praktische Durchführung der Reaktion unter Betriebsbedingungen, sie hat jedoch einige Nachteile. Der sehr schnelle Verlauf der eigentlichen Carbazolierung nach einer langen Vorreaktionsphase hat zur Folge, dass sich im Reaktionsgemisch praktisch von Anfang an ein bestimmter immer steigender Anteil des Produktes neben dem nicht voll ausreagierten Substrat, und zwar unter den verhältnismässig drastischen Bedingungen einer hohen Temperatur und der Anwesenheit von Metallhalogeniden befindet. Dies führt zur Bildung von nicht erwünschten Nebenprodukten, welche einerseits die Qualität des Produktes verschlechtern, andererseits die Ausbeute des erwünschten Produktes herabsetzen.

Ferner wird in der DE-OS 18 17 388 ein kontinuierliches Verfahren zur Carbazolierung von Anthrimiden vorgeschlagen, wonach die Suspension des Anthrimids zusammen mit Titantetrahalogenid in einem inerten höher siedenden organischen Lösungsmittel, wie z.B. o-Dichlorbenzol kontinuierlich unter Rühren durch eine geheizte Zone geleitet wird, wo die eigentliche Reaktion stattfindet. Ziel dieses Verfahrens ist es, durch eine relativ kurze Verweilzeit der Reaktanden im Reaktionsraum die Bildung von Nebenprodukten zu verringern. Nachteil ist jedoch, dass auch hier in einem heterogenen System gearbeitet wird.

Mit Hilfe des neuen erfinderischen Verfahrens werden alle diese Nachteile ausgeschaltet, da das Titantetrahalogenid in komplexierter Form eingesetzt wird, die einen konstanten und vollständigen Reaktionsablauf ermöglicht.

Gegenstand der Erfindung ist somit ein Verfahren zur intramolekularen Carbazolierung von Anthrimiden, das dadurch gekennzeichnet ist, dass man die Carbazolierungsreaktion mittels eines Titantetrahalogenid-Sulfon-Komplexes im Überschuss des Sulfons als Reaktionsmedium durchführt.

Die Reaktion verläuft nach folgendem Reaktionsschema:

1,1'-Dianthrimid

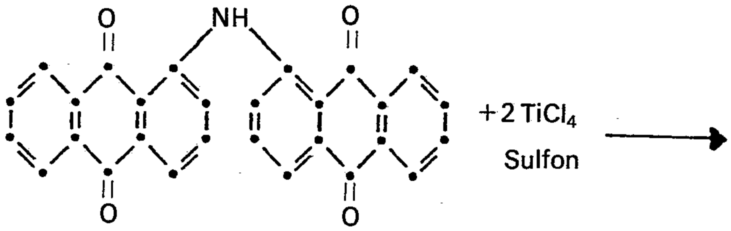

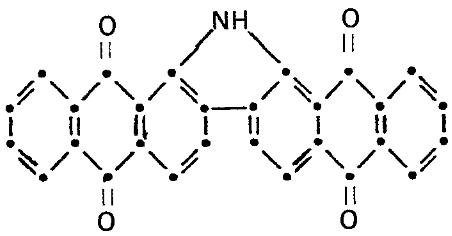

+2 HCl

Als Ausgangssubstanzen können sowohl nicht substituierte Di- und Polyanthrimide (z.B. 1,1'-, 1,2'-Dianthrimid,1,1',4,1"-,1,1',5,1"-Trianthrimid, 1,1',4,1", 4",1'"-Tetraanthrimid-,) als auch deren substituierte Derivate, (z.B. Alkyl-, Alkoxy-, Halogen- oder Acylaminoderivate) verwendet werden. Bevorzugt sind die unsubstituierten Verbindungen.

Die Di- und Polyanthrimide werden nach bekannten Verfahren durch Kondensation aus den entsprechenden Amino- und Halogenanthrachinonen erhalten (siehe z.B. Venkataraman «The Chemistry of Synthetic Dyes», Vol. II, 893–6, Academic Press, New York, 1952).

Wurde die Kondensation bislang in kochendem Nitrobenzol oder geschmolzenem Naphthalin durchgeführt, so hat sich überraschenderweise gezeigt, dass Sulfone auch für diesen, der Cyclisierung vorgelagerten Schritt, ein brauchbares Reaktionsmedium darstellen. Die Verwendung von Sulfonen erlaubt zudem die Durchführung beider Reaktionen in einer Eintopfreaktion, wobei die Isolierung des zunächst gebildeten Anthrimids aus dem Reaktionsgemisch unterbleibt.

Gegenstand der Erfindung ist somit auch ein Verfahren zur Herstellung von Carbazol-Derivaten der Anthrachinonreihe, das ausgeht von Mono- oder Diaminoanthrachinonen oder Mono- oder Diaminoanthrimiden, die mit Halogenanthrachinonen in einem Sulfon als Reaktionsmedium zu den entsprechenden Di-, Tri- oder Polyanthrimiden umgesetzt werden, die man anschliessend ohne Zwischenisolieren im gleichen Reaktionsmedium cyclisiert.

Die Kondensation der Mono- oder Diaminoanthrachinone bzw. -Anthrimide, (bevorzugt sind solche, bei denen sich die Aminogruppe in α-Stellung befindet) mit Halogenanthrachinonen, (hier handelt es sich bevorzugt um das 1-Chlor-, 1-Brom- oder 1-Jodanthrachinon) findet in Gegenwart eines säurebindenden Mittels und eines Cu-II-salzes statt. Als säurebindendes Mittel kommen z.B. Alkalimetallcarbonate, vorzugsweise Natriumcarbonat und als Cu-II-salz basisches Cu-II-acetat in Betracht. Die Kondensation wird bei einer Temperatur zwischen 150 °C und 250 °C durchgeführt.

Als Sulfone, mit denen Titantetrahalogenide einen Komplex bilden, und die zugleich auch als Lösungsmittel für diesen Komplex, sowie als Reaktionsmedium dienen, seien genannt:

Niedrigmolekulare Sulfone der Formel

$R_1$–$SO_2$–$R_2$ oder 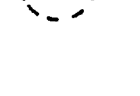

worin $R_1$ und $R_2$ je eine gerade oder verzweigte Alkylgruppe mit 1–4 C-Atomen und X eine gegebenenfalls mit Halogen substituierte gerade oder verzweigte Kohlenwasserstoffkette mit 4 bis 10 C-Atomen ist.

Dialkylsulfone: Dimethyl-, Methylethyl-, Diethyl-, Methyl-n-propyl-, Methylisopropyl-, Methyl-n-butyl-, Ethylisobutyl-, Diisopropylsulfon etc.

Alkenylsulfone: Tetramethylen-, 3-Methyltetramethylen-, Pentamethylen-, Hexamethylensulfon etc.

Bevorzugt sind Tetramethylen- und Dimethylsulfon.

Das Sulfon wird bevorzugt in der 1,5- bis 5,0-fachen Gewichtsmenge, bezogen auf das zur Reaktion gelangende Anthrimid eingesetzt. Für die Eintopfreaktion wird das Sulfon in der 5- bis 20-fachen Gewichtsmenge, bezogen auf die Aminokomponente verwendet.

Als Titantetrahalogenide kommen Titantetrabromid, vorzugsweise aber Titantetrachlorid, in Betracht. Die benötigte Menge von Titantetrahalogenid liegt zwischen 1,2 und 3,5 mol pro gebildetem Carbazolring bezogen auf jeweils 1 Mol Anthrimid. Die Reaktionstemperatur liegt zwischen 60 und 180 °C, bei Reaktionszeiten von einigen Minuten bis mehreren Stunden in Abhängigkeit von den eingesetzten Substraten. Der bei der Reaktion frei werdende Chlorwasserstoff (2 mol pro Carbazolring) wird mittels Natronlauge absorbiert. Nach beendeter Reaktion wird das Reaktionsgemisch mit Wasser oder verdünnter Salzsäure verdünnt, der erhaltene Rohfarbstoff abfiltriert, neutral gewaschen und in wässriger Suspension mit Natriumhypochlorit bei 80–90 °C behandelt. Die oxidative Nachbehandlung kann jedoch auch vor der Aufarbeitung direkt im Reaktionsgemisch erfolgen. Nach beiden Verfahren werden typkonforme Farbstoffe in nahezu quantitativer Ausbeute erhalten.

Das verwendete Sulfon (vorwiegend Tetramethylensulfon) kann auf einfache Weise regeneriert und recyclisiert werden. Die Reaktion kann in den üblichen Rührapparaturen (Rührkessel, Venleth) oder in kontinuierlich arbeitenden Reaktoren durchgeführt werden. Die nachfolgenden Beispiele veranschaulichen die Arbeitsweise des neuen Verfahrens im Detail.

Das neue Verfahren bietet gegenüber dem Stande der Tehnik folgende Vorteile:

– Höhere Produkt-Ausbeute (in den meisten Fällen nahezu quantitativ)

– Tiefere Reaktionstemperaturen

– Kürzere Reaktionszeiten

– Konzentriertere Arbeitsweise (höhere Raumzeitausbeuten)

– Einfachere Aufarbeitung (verwendete Lösungsmittel sind mit Wasser mischbar)

– Reinere Produkte nach einfacher Behandlung mit Chlorlauge (dabei kürzere Reaktionszeiten)

– Voraussetzung für kontinuierliche Arbeitsweise

– Lösungsmittel sind ungiftig [z.B. Tetramethylensulfon $LD_{50}$ (Maus, oral) 2500 mg/kg]

– Lösungsmittel werden auf einfache Weise regeneriert und recycliert
– Ökologisch unbedenkliche Abfälle: NaCl, $TiO_2$;
im Hinblick auf das Eintopfverfahren
– einfache Reaktionsführung
– kürzere Reaktionsdauer
– sehr gute Ausbeuten.

In den folgenden Beispielen bedeuten Teile Gewichtsteile und die Temperaturen sind in Grad Celsius angegeben.

Beispiel 1

Unter leichtem Stickstoffstrom werden 30,1 Teile 1,1'-Dianthrimid in 100 Teilen Tetramethylensulfon bei ca. 40° suspendiert und während 10 min 20,9 Teile Titantetrachlorid zugegeben. Die Temperatur steigt dabei auf ca. 60°. Anschliessend wird die Suspension auf 100° aufgeheizt. Die Chlorwasserstoffabspaltung setzt ein und die Temperatur steigt langsam auf ca. 105°. Der frei werdende Chlorwasserstoff wird in Natronlauge geleitet und absorbiert und dabei die abgespaltene HCl-Menge gemessen. Nach 1 Stunde ist die Reaktion beendet und das Reaktionsgemisch wird auf ca. 90° abgekühlt. Anschliessend werden unter Rühren 150 Teile Wasser zugetropft, das Reaktionsprodukt heiss abfiltriert und mit 200 Teilen heissem Wasser (in 2 Portionen) gewaschen. Dieses Filtrat (Mutterlauge + Waschwasser) wird zur Regeneration von Tetramethylensulfon eingesetzt. Nun wird das Nutschgut mit 150 Teilen verdünnter heisser Salzsäure (ca. 10%) und anschliessend mit heissem Wasser neutral gewaschen. Das feuchte Nutschgut wird in ca. 400 Teilen Wasser suspendiert und bei ca. 85° mit 100 Teilen Natriumhypochlorit (ca. 13%), das portionenweise zugesetzt wird, behandelt. Reaktionsdauer 1,5 Stunden. Das Reaktionsgemisch wird heiss abfiltriert, mit heissem Wasser, verdünnter Salzsäure und anschliessend heissem Wasser neutral gewaschen. Auf diese Weise wird ein sehr reiner Farbstoff folgender Formel in quantitativer Ausbeute erhalten.

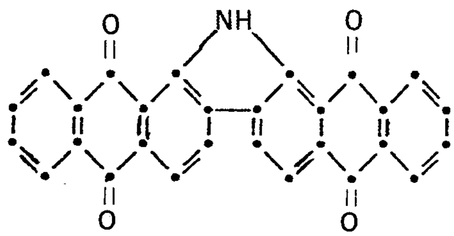

Regeneration von Tetramethylensulfon

Die Mutterlauge + Waschwasser wird mit Natronlauge versetzt und zwar in solcher Menge, dass eine ca. 10–15% NaOH-Konzentration erreicht wird. Dabei entsteht eine Suspension von Natriumtitanat und das Tetramethylensulfon scheidet sich ab. Das Gemisch wird auf 80° erwärmt und das abgetrennte Tetramethylensulfon in 100 Teile Toluol aufgenommen. Die organische Schicht wird abgetrennt (gegebenenfalls mit Aktivkohle klarfiltriert), das Toluol unter Wasserstrahlvakuum abdestilliert und zum Schluss 30 Minuten bei 90° gehalten. Das zurückgebliebene regenerierte Tetramethylensulfon (mindestens 85% der eingesetzten Menge) kann wieder in die gleiche Reaktion eingesetzt werden.

Beispiel 2

Unter leichtem Stickstoffstrom werden 97,5 Teile 1,1',5,1"-Trianthrimid in 180 Teilen Tetramethylensulfon bei ca. 40° suspendiert und während 15 min 97 Teile Titantetrachlorid zugegeben. Die Temperatur steigt dabei auf ca. 100°. Anschliessend wird die Suspension auf 145° aufgeheizt. Der frei werdende Chlorwasserstoff wird in Natronlauge geleitet, absorbiert und gemessen. Nach 1 Stunde ist die Reaktion beendet und das Reaktionsgemisch wird auf ca. 90° abgekühlt. Anschliessend werden unter Rühren 300 Teile Wasser zugegeben, das Reaktionsprodukt heiss abfiltriert und mit 300 Teilen (in 2 Portionen) heissem Wasser gewaschen. Aus diesem Filtrat wird das Tetramethylensulfon wie im Beispiel 1 beschrieben, regeneriert. Das Nutschgut wird nun mit heisser verdünnter Salzsäure und heissem Wasser neutral gewaschen. Das feuchte Nutschgut wird in 600 Teilen Wasser suspendiert und bei 85° mit insgesamt 700 Teilen Natriumhypochlorit (13%) behandelt. Reaktionsdauer 4 Stunden. Anschliessend wird das Reaktionsgemisch heiss abfiltriert, mit heissem Wasser, verdünnter heisser Salzsäure und heissem Wasser neutral gewaschen. Der so erhaltene Farbstoff der Formel

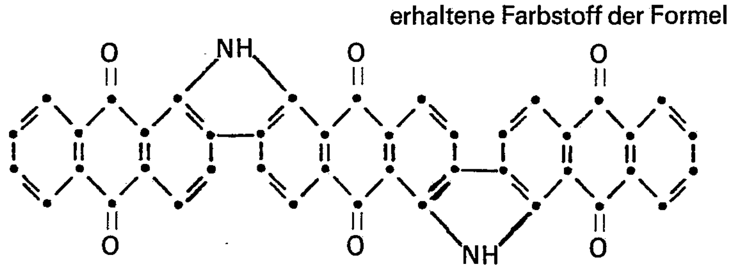

ist sehr rein und die Ausbeute beträgt 96% der Theorie.

Beispielhaft sollen hier nochmal die Vorteile gegenüber dem derzeit am meisten praktizierten Verfahren, das in FIAT 1313 II, 181-4, beschrieben ist und dem gemäss Beispiel 2 in einer Gegenüberstellung gezeigt werden.

Bei der Carbazolisierung von 1,1',5,1''-Trianthrimid sind folgende Daten massgebend:

| FIAT 1313 II, 181 | | Vorliegendes Verfahren | |
|---|---|---|---|
| | Eingesetzte Substrate in kg | | |
| $AlCl_3$ | 5,8 | Sulfolan | 2,0 (wovon ca. 1,7 durch Regenerierung gewonnen werden) |
| NaCl | 1,1 | | |
| | | $TiCl_4$ | 1,0 |
| HCl | 5,61 | HCl | 3,0 |
| NaOH | 1,0 | NaOH | 3,0 |
| NaOCl | 4,0 | NaOCl | 7,0 |
| Anthrimid | 1,21 | Anthrimid | 1,05 |
| | Produktausbeute | | |
| | 82,5% | | 96% |
| | Reaktionsdauer bei | | |
| 150–175° | 12 h | 145° | 1 h |
| | Chlorlaugenanwendung | | |
| | 10–12 h | | 4 h |

Dieser Vergleich zeigt nochmals die Überlegenheit des neuen Verfahrens in bezug auf Materialeinsatz, Produktausbeute und Zeitaufwand.

Beispiel 3

Unter leichtem Stickstoffstrom werden 100 Teile Dimethylsulfon auf ca. 80° aufgeheizt und 32 Teile Titantetrachlorid zugegeben. Die Temperatur steigt dabei auf ca. 110°. Zu dieser Lösung werden 32,5 Teile 1,1',5,1''-Trianthrimid zugegeben und die Temperatur auf 145° erhöht. Dabei wird Chlorwasserstoff frei, der in Natronlauge geleitet, absorbiert und gemessen wird. Nach einer Stunde ist die Reaktion beendet und das Reaktionsgemisch wird auf 90° abgekühlt. Anschliessend werden unter Rühren 150 Teile Wasser zugetropft, das Reaktionsprodukt heiss abfiltriert, mit verdünnter Salzsäure und heissem Wasser neutral gewaschen. Das feuchte Nutschgut wird in 300 Teilen Wasser suspendiert und bei 85° mit insgesamt 200 Teilen Natriumhypochlorit (13%) behandelt. Reaktionsdauer 4 Stunden. Das Reaktionsprodukt wird nun abfiltriert, mit heissem Wasser, heisser verdünnter Salzsäure und heissem Wasser neutral gewaschen. Auf diese Weise wird ein sehr reiner Farbstoff obiger Formel in einer Ausbeute von 95% der Theorie erhalten.

Beispiel 4

Unter leichtem Stickstoffstrom werden 32,5 Teile 1,1',4,1''-Trianthrimid in 150 Teilen Tetramethylensulfon bei 40° suspendiert und in 10 min 32 Teile Titantetrachlorid zugegeben. Die Temperatur steigt dabei auf 60°. Anschliessend wird die Temperatur auf 80° erhöht. Der frei werdende Chlorwasserstoff wird in Natronlauge geleitet, absorbiert und gemessen. Nach 1 Stunde ist die Reaktion beendet. Das Reaktionsgemisch wird nun mit 200 Teilen Wasser verdünnt, das Reaktionsprodukt heiss abfiltriert, mit heisser verdünnter Salzsäure und heissem Wasser neutral gewaschen. Das feuchte Nutschgut wird in 400 Teilen Wasser suspendiert und bei 85° mit insgesamt 200 Teilen Natriumhypochlorit (13%) behandelt. Reaktionsdauer: 4 Stunden. Anschliessend wird das Reaktionsprodukt heiss abfiltriert, mit heisser verdünnter Salzsäure und heissem Wasser neutral gewaschen. Der so erhaltene Farbstoff folgender Formel ist sehr rein und die Ausbeute ist quantitativ.

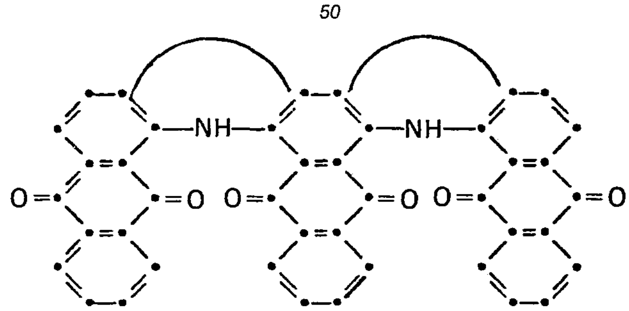

Beispiel 5

Unter leichtem Stickstoffstrom werden 34,8 Teile 1, 1'-, 4', 1'', 4'', 5'''-Tetraanthrimid-3', 2''-carbazol in 100 Teilen Tetramethylensulfon bei 40° suspendiert und in 10 min 29 Teile Titantetrachlorid zugegeben. Die Temperatur steigt dabei

auf 60°. Anschliessend wird die Temperatur auf 140° erhöht. Der frei werdende Chlorwasserstoff wird in Natronlauge geleitet, absorbiert und gemessen. Nach 1 Stunde ist die Reaktion beendet und das Reaktionsgemisch wird auf 90° abgekühlt. Bei dieser Temperatur werden 150 Teile Wasser zugetropft. Die Suspension wird abfiltriert, mit heisser verdünnter Salzsäure und heissem Wasser neutral gewaschen. Das feuchte Nutschgut wird in 400 Teilen Wasser suspendiert und bei 85° mit insgesamt 250 Teilen Natriumhypochlorit (13%) behandelt. Reaktionsdauer 4 Stunden. Anschliessend wird das Reaktionsprodukt heiss abfiltriert, mit heisser verdünnter Salzsäure und heissem Wasser neutral gewaschen. Auf diese Weise wird ein sehr reiner Farbstoff der Formel

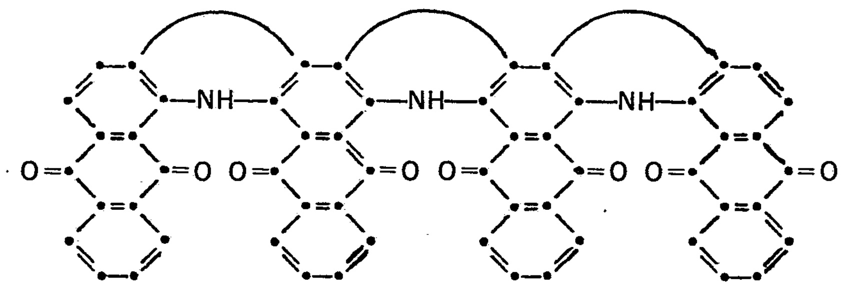

in quantitativer Ausbeute erhalten.

Beispiel 6

Unter leichtem Stickstoffstrom werden 11,2 Teile 1-Amino-anthrachinon, 12,4 Teile 1-Chloranthrachinon, 1 Teil Kupfer(II)-carbonat basisch und 4 Teile Natriumcarbonat in 175 Teilen Tetramethylensulfon suspendiert, auf 200° erwärmt und bei dieser Temperatur 3 Stunden gehalten. Das Reaktionswasser wird laufend abdestilliert. Nach Abkühlung der Suspension auf ca. 60° werden 28,5 Teile Titantetrachlorid zugegeben und die Suspension auf ca. 115° aufgeheizt. Der dabei frei werdende Chlorwasserstoff wird in Natronlauge absorbiert und damit der Verlauf der Reaktion kontrolliert. Nach ca. 1,5 Stunden ist die Carbazolierung beendet. Das Reaktionsgemisch wird bei ca. 80° mit verdünnter Schwefel- oder Salzsäure verdünnt, das Reaktionsprodukt heiss abfiltriert und neutral gewaschen. Aus der Mutterlauge kann das verwendete Tetramethylensulfon regeneriert und wieder eingesetzt werden (s. Beispiel 1). Das feuchte Nutschgut wird nun auf bekannte Weise mit Natriumhypochlorit behandelt. So wird der Farbstoff mit der im Beispiel 1 angegebenen Formel in einer Ausbeute von 92% der Theorie (bezogen auf 1-Aminoanthrachinon) erhalten.

Beispiel 7

Unter leichtem Stickstoffstrom werden 11,9 Teile 1,5 Diaminoanthrachinon, 24,8 Teile 1-Chloranthrachinon, 1,2 Teile Kupfer(II)-carbonat basisch und 7,9 Teile Natriumcarbonat in 100 Teilen Tetramethylensulfon suspendiert und auf 200° erwärmt. Das Reaktionswasser wird laufend abdestilliert. Nach 5 Stunden ist die Kondensation beendet und das Reaktionsgemisch wird auf 60° abgekühlt. Anschliessend werden 56,9 Teile Titantetrachlorid zugegeben und die Temperatur wird auf 145° erhöht. Der dabei frei werdende Chlorwasserstoff wird in Natronlauge absorbiert. Nach ca. 1,5 Stunden ist die Reaktion beendet und die weitere Aufarbeitung des Rohproduktes erfolgt wie im Beispiel 6 angegeben.

Auf diese Weise wird der Farbstoff mit der im Beispiel 2 angegebenen Formel in einer Ausbeute von 88% der Theorie (bezogen auf 1,5-Diaminoanthrachinon) erhalten.

Beispiel 8

Unter leichtem Luftstrom werden 12 Teile Leuko-1,4-diaminoanthrachinon in 100 Teilen Tetramethylensulfon suspendiert, auf ca. 150° erwärmt und 1 Stunde bei dieser Temperatur gehalten. Nach beendeter Luftoxydation werden unter leichtem Stickstoffstrom 24,8 Teile 1-Chloranthrachinon, 1,2 Teile Kupfer(II)-carbonat basisch, 7,9 Teile Natriumcarbonat, 25 Teile Tetramethylensulfon zugegeben und die Temperatur wird auf 200° erhöht. Das Reaktionswasser wird laufend abdestilliert. Nach 2 Stunden ist die Kondensation beendet. Das Reaktionsgemisch wird nun mit 50 Teilen Tetramethylensulfon verdünnt und auf ca. 60° abgekühlt. Anschliessend werden 56,9 Teile Titantetrachlorid zugegeben und die Temperatur auf 115° erhöht. Der frei werdende Chlorwasserstoff wird in Natronlauge absorbiert. Nach ca. 1,5 Stunden ist die Carbazolierung beendet und das Reaktionsgemisch wird bei ca. 80° mit verdünnter Schwefel- oder Salzsäure verdünnt und mit Natriumchlorat-Lösung bei 80° behandelt. Nach erfolgter Oxydation wird das Produkt heiss abfiltriert, neutral gewaschen und getrocknet.

Auf diese Weise wird der Farbstoff mit der im Beispiel 4 angegebenen Formel in einer Ausbeute von 96% der Theorie (bezogen auf Leuko-1,4-diaminoanthrachinon) erhalten.

Beispiel 9

Unter leichtem Stickstoffstrom werden 13,8 Teile 4,4'-Diamino-1,1'-dianthrimid, 24,8 Teile 1-Chloranthrachinon, 1 Teil Kupfer(II)-carbonat basisch und 4,8 Teile Natriumcarbonat in 125 Teilen Tetramethylensulfon suspendiert und auf 200° erwärmt. Das Reaktionswasser wird laufend abdestilliert. Nach 1,5 Stunden ist die Kondensation beendet und das Reaktionsgemisch wird auf

ca. 60° abgekühlt. Anschliessend werden 56,9 Teile Titantetrachlorid zugegeben, die Temperatur auf 110° erhöht und 1,5 Stunden bei dieser Temperatur gehalten. Der frei werdende Chlorwasserstoff wird in Natronlauge absorbiert. Dann wird das Reaktionsgemisch auf 80° abgekühlt, mit verdünnter Schwefel- oder Salzsäure verdünnt und auf bekannte Weise mit Natriumchlorat-Lösung behandelt.

Die Ausbeute an Farbstoff der im Beispiel 5 angegebenen Formel beträgt 95% der Theorie (bezogen auf 4,4'-Diamino-1,1'-dianthrimid).

## Patentansprüche

1. Verfahren zur Carbazolierung von Anthrimiden, dadurch gekennzeichnet, dass man die Carbazolierungsreaktion mittels eines Titantetrahalogenid-Sulfon-Komplexes im Überschuss des Sulfons als Reaktionsmedium durchführt.

2. Verfahren gemäss Anspruch 1, dadurch gekennzeichnet, dass man ein Sulfon der Formel

$R_1{-}SO_2{-}R_2$ oder 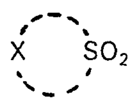

verwendet, worin $R_1$ und $R_2$ je eine gerade oder verzweigte Alkylgruppe mit 1 bis 4 C-Atomen und X eine gegebenenfalls mit Halogen substituierte, gerade oder verzweigte Kohlenwasserstoffkette mit 4 bis 10 C-Atomen ist.

3. Verfahren gemäss Ansprüchen 1 und 2, dadurch gekennzeichnet, dass man als Sulfon Tetramethylensulfon oder Dimethylsulfon einsetzt.

4. Verfahren gemäss Anspruch 1, dadurch gekennzeichnet, dass man das Sulfon in der 1,5–5,0-fachen Gewichtsmenge, bezogen auf das zur Reaktion gelangende Anthrimid, einsetzt.

5. Verfahren gemäss Anspruch 1, dadurch gekennzeichnet, dass man als Titantetrahalogenid Titantetrachlorid einsetzt.

6. Verfahren gemäss Anspruch 1, dadurch gekennzeichnet, dass man das Titantetrahalogenid in einer Menge von 1,2–3,5 Mol pro gebildetem Carbazolring bezogen auf jeweils 1 Mol Anthrimid einsetzt.

7. Verfahren gemäss Anspruch 1, dadurch gekennzeichnet, dass man 1,1'-, 1,2'-Dianthrimid, 1,1',4,1"-, 1,1',5,1"-Trianthrimid, oder 1,1',4,1", 4",1'''Tetraanthrimid der Carbazolierungsreaktion unterwirft.

8. Verfahren gemäss Anspruch 1, dadurch gekennzeichnet, dass man die Cyclisierung bei einer Temperatur zwischen 60–180 °C durchführt.

9. Verfahren gemäss Anspruch 1, dadurch gekennzeichnet, dass man das Reaktionsgemisch vor der Aufarbeitung einer oxidativen Nachbehandlung unterwirft.

10. Abänderung des Verfahrens nach Anspruch 1, dadurch gekennzeichnet, dass man in einer Eintopfreaktion, unter Verwendung eines Sulfons als Reaktionsmedium, ein Mono- oder Diaminoanthrachinon oder ein Mono- oder Diaminoanthrimid in Gegenwart eines säurebindenden Mittels und eines Cu-II-salzes, mit einem Monohalogenanthrachinon umsetzt, und das gebildete Di- oder Polyanthrimid ohne Zwischenisolation in Gegenwart eines Titantetrahalogenid-Sulfon-Komplexes zum Carbazolderivat cyclisiert.

11. Verfahren gemäss Anspruch 1, dadurch gekennzeichnet, dass man die Reaktion in kontinuierlich arbeitenden Reaktoren durchführt.

## Revendications

1. Procédé de carbazolation d'anthrimides, caractérisé en ce que l'on réalise la réaction de carbazolation à l'aide d'un complexe tétrahalogénure de titane-sulfone, dans un excès de la sulfone en tant que milieu réactionnel.

2. Procédé selon la revendication 1, caractérisé en ce que l'on utilise une sulfone de formule

$R_1{-}SO_2{-}R_2$ ou 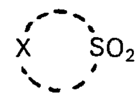

où $R_1$ et $R_2$ sont chacun un groupe alkyle à chaîne droite ou ramifiée à 1 à 4 atomes de carbone et X est une chaîne hydrocarbonée à 4 à 10 atomes de carbone, droite ou ramifiée, éventuellement substituée par un halogène.

3. Procédé selon les revendications 1 ou 2, caractérisé en ce que l'on utilise en tant que sulfone de la tétraméthylène-sulfone ou de la diméthylsulfone.

4. Procédé selon la revendication 1, caractérisé en ce que l'on utilise un poids de sulfone 1,5 à 5,0 fois plus élevé que le poids de l'anthrimide réagissant.

5. Procédé selon la revendication 1, caractérisé en ce que l'on utilise en tant que tétrahalogénure de titane du tétrachlorure de titane.

6. Procédé selon la revendication 1, caractérisé en ce que l'on utilise le tétrahalogénure de titane en une quantité de 1,2–3,5 moles par noyau carbazole formé, pour chaque mole d'anthrimide.

7. Procédé selon la revendication 1, caractérisé en ce que l'on soumet à la réaction de carbazolation du 1,1'-, 1,2'- dianthrimide, du 1,1',4,1"-, 1,1',5,1"-trianthrimide ou du 1,1',4,1", 4",1'''-tétraanthrimide.

8. Procédé selon la revendication 1, caractérisé en ce que l'on effectue la cyclisation à une température comprise entre 60 et 180 °C.

9. Procédé selon la revendication 1, caractérisé en ce que l'on soumet le mélange réactionnel, avant le traitement final de récupération du produit, à un post-traitement par oxydation.

10. Variante du procédé selon la revendication 1, caractérisée en ce que l'on fait réagir, dans une réaction en un pot, en utilisant une sulfone en tant que milieu réactionnel, une mono- ou diaminoanthraquinone ou un mono- ou diamino-anthrimide, en présence d'un produit fixant les acides et d'un sel de Cu(II), sur une monohalogéno-anthraquinone, et que'on cyclise le di- ou polyanthrimide formé, sans isolation intermédiaire, en présence d'un complexe tétrahalogénure de titane-sulfone pour obtenir un dérivé de carbazole.

11. Procédé selon la revendication 1, caractérisé en ce que l'on rèalise la réaction dans des réacteurs fonctionnant en continu.

**Claims**

1. A process for the carbazolation of anthrimides, which process comprises carrying out the carbazolation reaction by means of a titanium tetrahalide/sulfone complex in an excess of the sulfone as the reaction medium.

2. A process according to Claim 1, wherein there is used a sulfone of the formula

$R_1$–$SO_2$–$R_2$ or. 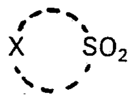

wherein $R_1$ and $R_2$ are each a straight-chain or branched-chain alkyl group having 1 to 4 C atoms, and X is a straight-chain or branched-chain hydrocarbon chain which has 4 to 10 C atoms and which is unsubstituted or substituted by halogen.

3. A process according to Claims 1 and 2, wherein the sulfone used is tetramethylenesulfone or dimethylsulfone.

4. A process according to Claim 1, wherein the sulfone is used in the 1.5- to 5-fold amount by weight, relative to the amount of anthrimide being reacted.

5. A process according to Claim 1, wherein the titanium tetrahalide used is titanium tetrachloride.

6. A process according to Claim 1, wherein the titanium tetrahalide is used in an amount of 1.2–3.5 mols per formed carbazole ring, relative to 1 mol of anthrimide.

7. A process according to Claim 1, wherein 1,1'- or 1,2'-dianthrimide, 1,1',4,1"-or 1,1',5,1"-trianthrimide, or 1,1',4,1",4",1'"-tetraanthrimide is subjected to the carbazolation reaction.

9. A process according to Claim 1, wherein the cyclisation reaction is performet at a temperature of between 60 and 180 °C.

9. A process according to Claim 1, wherein the reaction mixture is subjected to an oxidative aftertreatment before further processing.

10. A modification of the process according to Claim 1, whereby, in a single-vessel reaction with use of a sulfone as the reaction medium, a mono- or diaminoanthraquinone, or a mono- or diaminoanthrimide, is reacted, in the presence of an acid-binding agent and of a Cu(II) salt, with a monohaloanthraquinone; and the formed di- or polyanthrimide is cyclised without intermediate isolation, in the presence of a titanium tetrahalide/sulfone complex, to give the carbazole derivative.

11. A process according to Claim 1, wherein the reaction is performed in continuously operating reactors.